# EUROPEAN PATENT SPECIFICATION

(11) **EP 1 773 926 B1**
(45) Date of publication and mention of the grant of the patent: **25.01.2012**
(21) Application number: 04749234.3
(22) Date of filing: 14.07.2004
(51) Int. Cl.: C08K 3/34, C01B 33/44

(54) **NANOCOMPOSITES AND PROCESS FOR THEIR PRODUCTION**
NANOKOMPOSITE UND HERSTELLUNGSVERFAHREN DAFÜR
NANOCOMPOSITES ET PROCESSUS DE FABRICATION CORRESPONDANT

(43) Date of publication of application: 18.04.2007
(73) Proprietor: Agency for Science, Technology and Research, Singapore 138668 (SG)
(72) Inventor: WANG, Ke, Singapore 117602 (SG); WU, Jingshen, Singapore 117602 (SG); CHEN, Ling, Singapore 117602 (SG); HE, Chaobin, Singapore 117602 (SG)
(74) Representative: Viering, Jentschura & Partner
(86) International application number: PCT/SG2004/000212
(87) International publication number: WO 2006/006937

(56) References cited:
- EP-A2- 0 822 163
- EP-B1- 1 055 706
- WO-A1-99/47598
- WO-A1-99/47598
- WO-A1-99/54393
- WO-A2-01/96237
- US-A- 5 164 440
- US-A- 5 866 645
- US-B1- 6 252 020

## Description

### FIELD OF THE INVENTION

This invention relates to nanocomposites and a process for their production.

### BACKGROUND OF THE INVENTION AND PRIOR ART

One of the major problems preventing polymer/clay nanocomposites manufacture on a large scale is the difficulty to reach a high degree of clay exfoliation and uniform dispersion in polymer/clay systems to form a true nanostructure. The anticipated high performance of polymer/clay nanocomposites, such as high strength and modulus, good barrier properties, fire retardant and scratch resistance are believed to be the direct results of the ultra-high aspect ratio as well as the extremely large surface area of the exfoliated nanoclay. Without the required clay exfoliation, it has been shown that the property improvements of adding nanoclay in a rigid polymer matrix is very limited and in some cases a negative impact has been reported.

Pristine clay is a preferred starting material. However, the surface of pristine clay is hydrophilic and not compatible with most polymers. To overcome this problem, organic modifiers are widely used to modify the clay surface and improve the extent of exfoliation. The modified clay which is commonly known as "organoclay", often contains a considerable amount of organic modifier. Consequently, the price of the organoclay is high and furthermore residual low molecular weight modifiers remain in the nanocomposite, which can cause deterioration of the thermal and mechanical performance of the product

This invention provides a novel approach to preparation of nanocomposites and nanocomposites so obtained.

### SUMMERY OF THE INVENTION

In accordance with the invention, there is provided a process of forming a nanocomposite comprising:
treating pristine clay with water to form a swollen clay;
intercalating said swollen clay with an organic solvent to form an organic solvent intercalated swollen clay by exchanging said water with said organic solvent whilst maintaining said swollen clay in a swollen state with said solvent;
treating said organic solvent intercalated swollen clay with a modifier; and,
mixing said organic solvent intercalated swollen clay so modified with a matrix material comprising a monomer, oligomer, polymer or any combination thereof to form a nanocomposite mixture and, if required, polymerizing said matrix material.

### BRIEF DESCRIPTION OF THE DRAWINGS

Figure 1 shows an optical micrograph of polished surface of epoxy D4R332/organoclay (epoxy/Cloisite 93A) nanocomposites (clay content of 2.5 wt%), of the prior art. (Scale bar: right: 50 µm)
Figure 2 shows an optical micrograph of polished surface of epoxy DER332/pristine clay nanocomposites (clay content of 2.5 wt%), according to the present invention. (Scale bar: right: 50 µm)
Figure 3 shows a TEM micrograph of the epoxy DER332/organo clay (epoxy/Cloisite 93A) nanocomposites (clay-content of 2.5wt%) of the same prior art shown in Figure 1.
Figure 4 shows a TEM micrograph of epoxy DER332/clay nanocomposites (clay content of 2.5wt%) prepared with technique of the present invention.
Figure 5 shows the mechanical properties of epoxy DER332/clay nanocomposites of the invention using Young's modulus.
Figure 6 shows the mechanical properties of epoxy DER332/clay nanocomposites of the invention using fracture toughness.
Figure 7 shows the comparison of the Young's Modulus of the nanocomposites of the invention prepared with different method. (Ref: Becker, Cheng, Varley, Simon, Macromolecules, 2003, 36, 1616-1625). Ref A was cured at 100°C 2 h, 130°C 1 h, 160°C 12 h, 200°C 2 h. Ref B was cured at 160°C 12 h, 200°C 2 h.
Figure 8 shows the comparison of the fracture toughness of the nanocomposites of the invention prepared with different method. (Ref Becker, Cheng, Varley, Simon, Macromolecules, 2003, 36, 1616-1625). Ref A was cured at 100°C 2 h, 130°C 1 h, 160°C 12 h, 200°C 2 h. Ref B was cured at 160°C 12 h, 200°C 2 h.
Figure 9 shows the storage modulus, E' versus temperature for neat epoxy, epoxy DER332/clay nanocomposites of the invention and that of an epoxy DER332/organoclay nanocomposite (epoxy/Cloisite 93A) of the prior art.
Figure 10 shows the tan δ versus temperature for epoxy DER332/clay nanocomposites of the invention and that of an epoxy DER332/organoclay nanocomposite (epoxy/Cloisite 93A). In

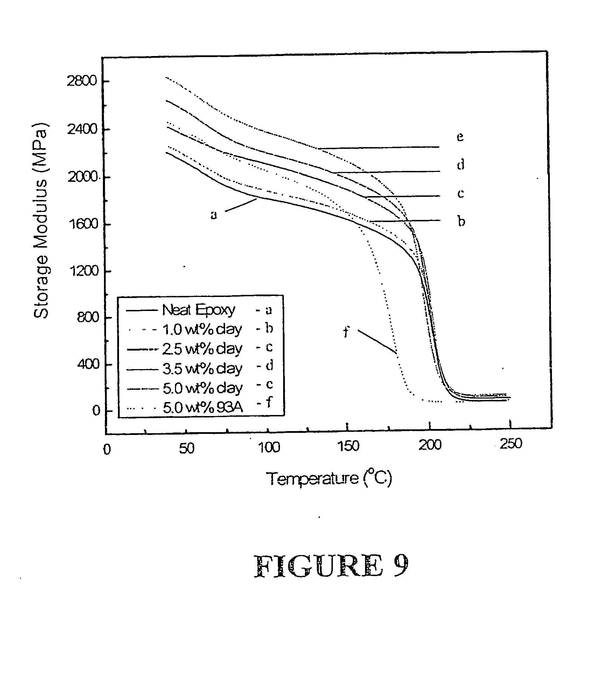

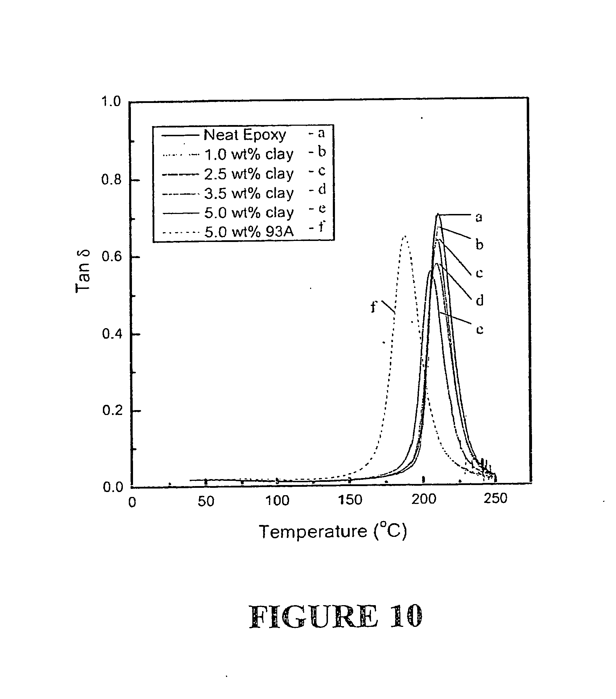

Figures 9 and 10, curve a is neat epoxy,curves b,c,d and e are 1.0, 2.5, 3.5 and 5.0 wt%clay respectively. Curve f contains 5.0 wt%Cloisite 93A.

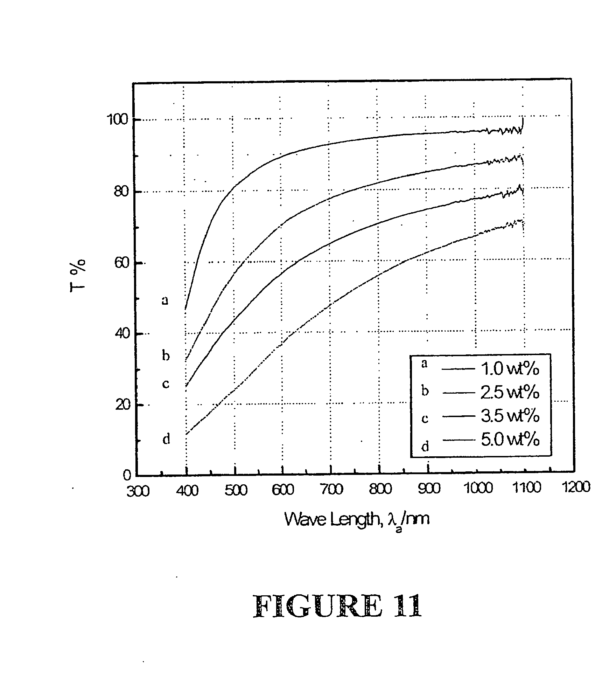

Figure 11 shows light transmittance of nanocomposites according to the invention at various clay concentrations. Curves a,b,c and d are at 1.0, 2.5, 3.5 and 5.0wt% clay respectively.

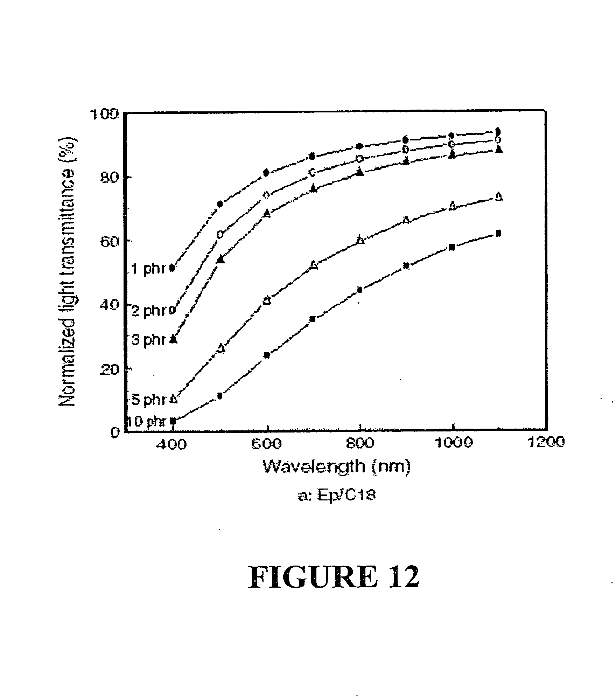

Figure 12 shows a comparison of light transmittance according to prior art approach. (Ref: Deng, et al., Polymer International, 2004, 53, 85-91).

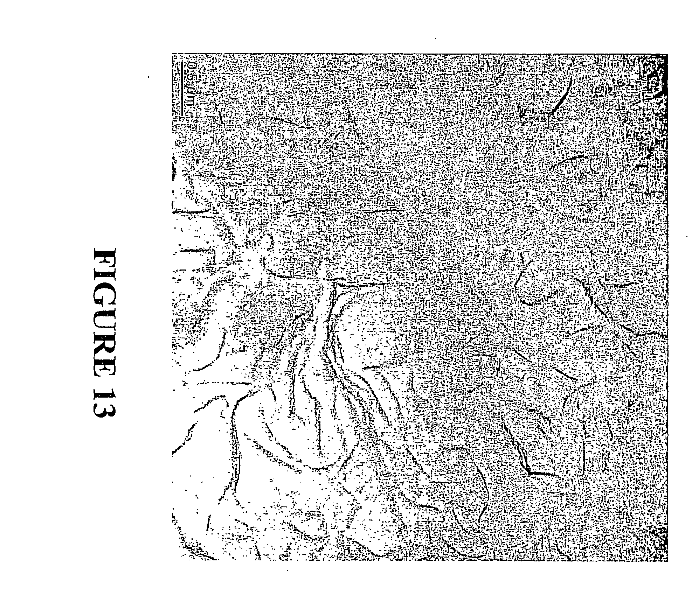

Figure 13 shows a TEM micrograph of epoxy LY5210/clay nanocomposites (clay content of 2.5wit%) prepared with technique of the present invention.

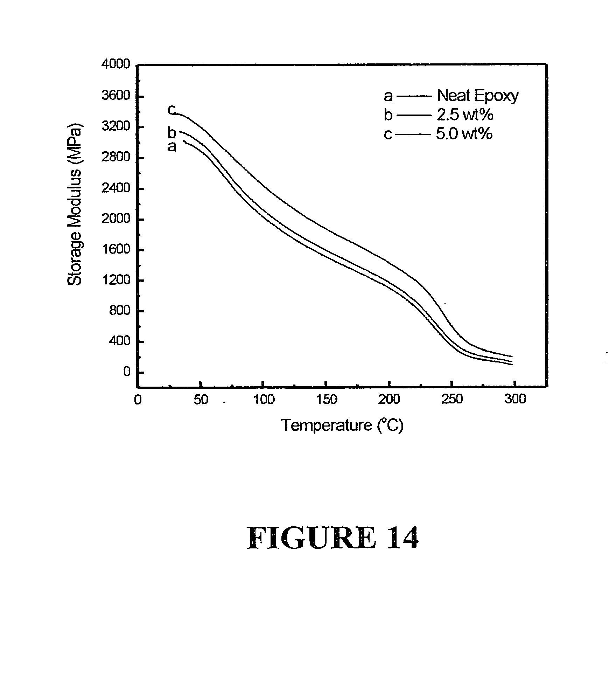

Figure 14 shows the storage modulus, E' versus temperature for epoxy LY5210/clay nanocomposites of the invention.

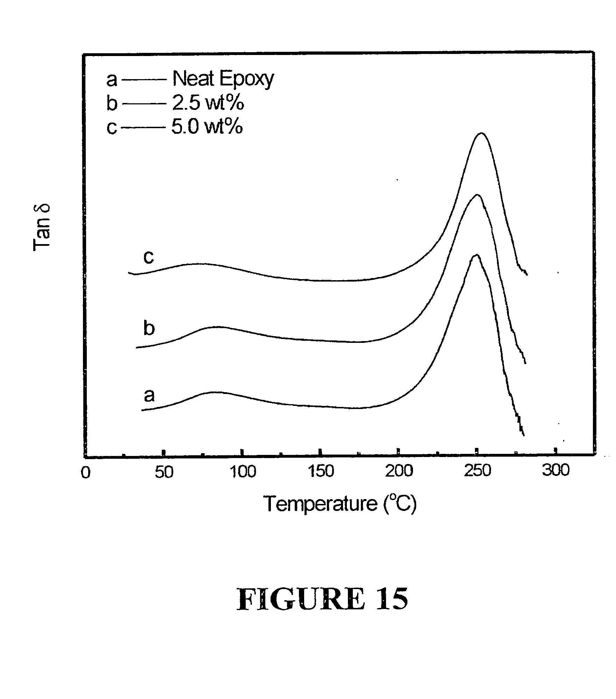

Figure 15 shows the tan δ versus temperature for epoxy LY5210/clay nanocomposites of the invention. In Figures 13 and 14, curve a is neat epoxy, curves b and c are 2.5 and 5.0 wt%clay respectively.

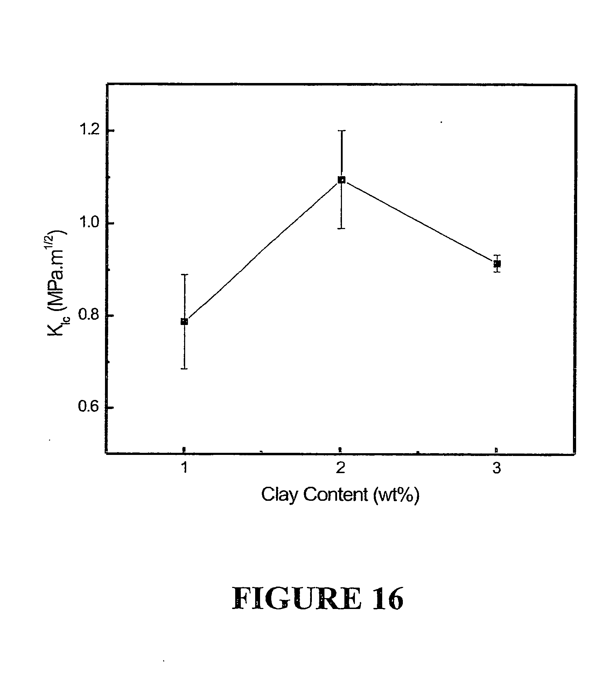

Figure 16 shows the mechanical properties of epoxy LY5210/clay nanocomposites of the invention using fracture toughness.

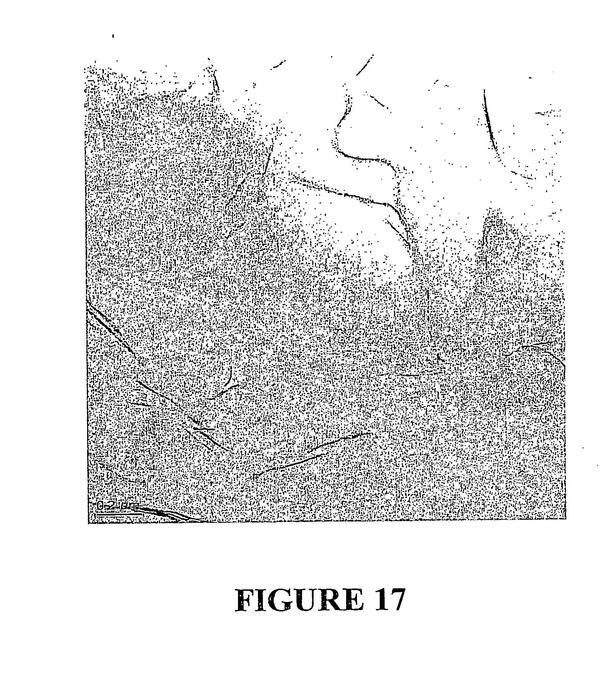

Figure 17 shows a TEM micrograph of epoxy DER332/clay nanocomposites (clay content of 2.5wt%) prepared with technique of the present invention.

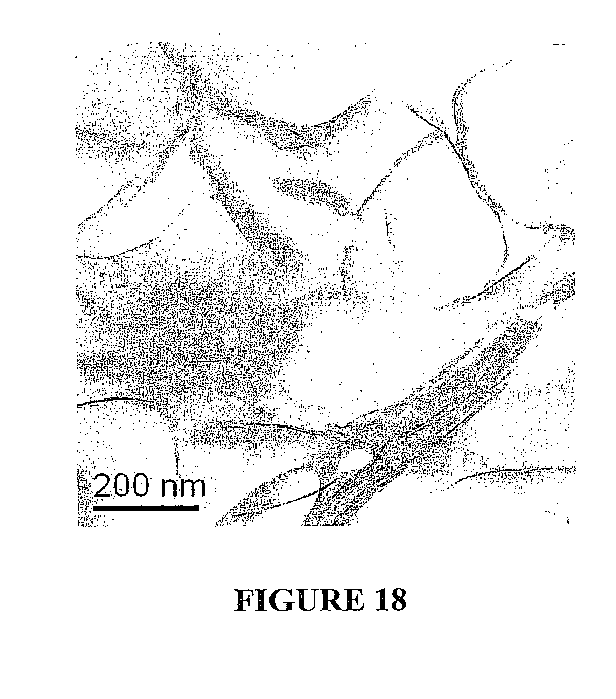

Figure 18 shows a TEM micrograph of epoxy DER332/clay nanocomposites (clay content of 2.5wt%) prepared with technique of the present invention.

### DETAILED DESCRIPTION OF THE INVENTION

By the invention, the pristine clay is first dispersed in water to form a dispersion. This causes swelling of the individual clay particles by penetration of the water into the clay gallery spaces.

The water dispersion is then exchanged with an organic solvent. The choice of solvent and the conditions of exchange are such that the swollen state of the clay is maintained. By using an organic solvent, the amount of modifiers can be reduced while exfoliation of the clay particles is improved. Substantially complete exfoliation can be achieved in at least the preferred forms of the invention.

The organic solvent used in this invention facilitates the reaction between the modifier and the clay and also facilitates the uniform dispersion of the clay layers in the monomers, oligomers or polymers. The organic solvent can also act as a solvent for such monomers, oligomers or polymers.

The organic solvent can be a polar or non-polar solvent. If it is non-polar and is not miscible with water, it will usually be used with a polar solvent. By such a solvent system, compatibility of the system with the hydrophilic clay layers and the hydrophobic molecules which may be used as a modifier or as the monomer, polymer or oligomer can be achieved.

The organic solvent is preferably of a low boiling point in order that the reactions are conducted at a low temperature and so that the solvent after performing its function can be easily removed by evaporation.

The organic solvents will thus be preferred including, but are not limited to ketones such as acetone, methyl ethyl ketone, methyl isobutyl ketone and cyclohexanone; alcohols such as methanol, ethanol, propanol, n-butanol, i-butanol, sec-butanol and tert-butanol; glycols such as ethylene glycol, propylene glycol and butylene glycol; esters such as methyl acetate, ethyl acetate, butyl acetate, diethyl oxalate and diethyl malonate; ethers such as diethyl ether, ethylene glycol dimethyl ether, diethylene glycol dimethyl ether and tetrahydrofuran; halogenated hydrocarbons such as dichloromethane, 1,2-dichloroethane, 1,4-dichlorobutane, trichloroethane, chlorobenzene and o-dichlorobenzene; hydrocarbons such as hexane, heptane, octane, benzene, toluene and xylene. Others include N-methyl-2-pyrrolidone, N,N-dimethylacetamide, N,N-dimethylformamide, dimethyl sulfoxide, tetramethylurea, hexamethylphosphoric triamide, and gamma-butyrolactone. These solvents may be used either singly or in any combination thereof. A solvent or a combination thereof with a boiling point below 100° C is generally preferred for ease of handling and low cost.

In the process of the invention, the clay is first mixed with water. The ratio of clay to water can vary from 1:1 to 1:1000. Preferably from 1:2 to 1:500, more preferably from 1:5 to 1:200.

The ratio of the amount of water to the amount of organic solvent can vary widely as long as the clay remains in a swollen state. The amounts can vary from 1:1 to 1:50.

The clay used in the formation of the nanocomposites is one generally utilised in the prior art. Thus it can be selected from the group consisting of smectite and kaolin clays. Smectite clays for use in the current invention can be selected from the group consisting of montmorillonite, hectorite, saponite, sauconite, beidellite, nontronote, and combinations of two or more thereof. More preferably the clay is selected from the group consisting of hectorite, montmorillonite, beidellite, stevensite, and saponite. Typically the clay used in the current invention will have a cation-exchange capacity ranging from 7 to 300 meq/100 g.

The amount of clay used in the nanocomposites of the current invention will vary depending upon the desired properties in the final nanocomposite and generally range from 0.1 % to 40 % by weight based on the total weight of the composition.

The organic modifier of the current invention can be those referred to in the prior art. The modifiers normally have a function to react with the clay surface and with the polymer chains. The clay surfaces are hydrophilic. The polymer chain can vary from hydrophobic to having some degree of hydrophilicity. The modifier will have both a hydrophilic and a hydrophobic functional group. Hence the modifier can be selected from the group consisting of surfactants, coupling agents and compatibilizers. Suitable modifiers can be selected from alkylammonium salts, organosilanes, alkyl acids (or functional derivatives thereof, such as an acid chloride or anhydride), grafted copolymers and block copolymers. In each case the modifier will be selected so that it has a functional group that can bond to the clay layers and another functional group that can bond to the polymer. It is a feature of the current invention that the modifier can be used in a much lower amount than proposed in the prior art methods. Hence, the amount of modifier can be reduced to an amount within the range 0.15 to 15 weight percent.

The polymer can be selected from any polymers normally used in a composite in the prior art. Hence polymers chosen from thermosetting polymers, thermoplastic polymers, and combinations thereof can be employed. The polymers can be incorporated in the process of the invention as a polymerizable monomer and then polymerized. Such polymers include thermosetting polymers such as epoxies, polyester resins and curing rubbers; thermoplastic polymers such as polyolefins which can consist of polyethylenes, polypropylenes, polybutylenes, polymethylpentene, polyisoprenes and copolymers thereof, copolymers of olefins and other monomers such as ethylene-vinyl acetate, ethylene acid copolymers, ethylene-vinyl alcohol, ethylene-ethyl acrylate, and ethylene-methyl acrylate, polyacrylates such as polymethyl methylacrylate, polybutyl acrylate, polyethyl methacrylate, polyisobutyl acrylate, poly(2-ethylhexyl acrylate), poly(amino acrylates), poly(hydroxyethylmethacrylate), poly(hydroxypropyl methacrylate), or other polyalkyl acrylates; polyesters such as polyarylates, polybutylene terephthalate and polyethylene terephthalate; polystyrene and copolymers such as ABS, SAN, ASA and styrene-butadiene; engineering resins such as polycarbonate, polyetherimide, polyetheretherketone, polyphenylene sulphide and thermoplastic polyimides; elastomers such as olefinic TPE's, polyurethane TPE's, and styrenic TPE's; chlorinated polymers such as PVC and polyvinylidene dichloride; silicones such as polydimethyl siloxane, silicone rubber, silicone resin; fluoropolymers and copolymers with other monomers are useful such as polytetrafluoroethylene, fluorinated ethylene-propylene, perfluoroalkoxy resins, polychlorotrifluoroethylene, ethylene-chlorofluoroethylene copolymer, polyvinylidene fluoride and polyvinylfluoride. Additional polymers are nitrile resins, polyamides (nylons), polyphenylene ether and polyamide-imide copolymers. Also included are the sulfone based resins such as polysulfone, polyethersulfone and polyarylsulfone. Other families of thermoplastic resins useful in this invention are acetals, acrylics and cellulosics. Liquid crystal polymers, a family of polyester copolymers, can also be used. In addition, miscible or immiscible blends and alloys of any of the above resin combinations are useful for this invention.

The amount of polymer in the composite can vary from 60 % up to 99.9 % by weight of the total composition depending on the desired application. The preferred polymer content can be 80% to 99.5%; more preferably 85% to 99.5%.

The invention will now be described with reference to the following examples but is not to be construed as limited thereto.

### Examples

### Example 1

2 grams of Cloisite 93A, an commercial organoclay containing 40 wt% of alkylammonium, was mixed with 60.8 g of Dow epoxy resin DER 332 by using a homogenizer for 2 hours at a speed of 10000 rpm. The mixture then mixed with 16g curing agent (ETHACURE 100 LC) by stirring and cured at 100° C for 2 hours and 180° C for 5 hours. The final product was a plate and subject to a number of tests.

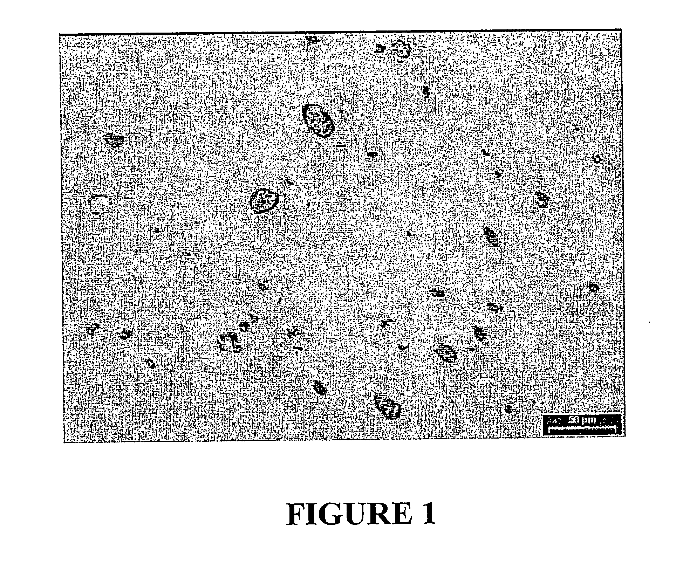

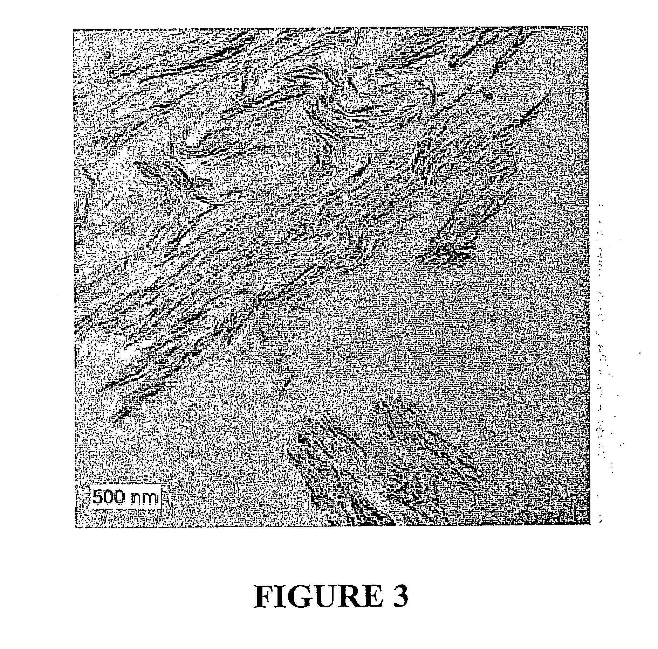

The optical micrograph is shown in Figure 1. The TEM micrograph is shown in Figure 3.

### Example 2

2 grams of purified sodium montmorillonite having a cation exchange capacity of 145 meq/100g, was mixed with 100 ml of water, with stirring for 24 hours at room temperature to form a suspension. The suspension was precipitated in 1000 ml of acetone at room temperature with stirring and washed with acetone at room temperature for 3 times. 3-aminopropyltrimethoxy-silane was added as the coupling agent in an amount of 0.1 g. The mixture was then stirred for 12 hours at room temperature. Then 60.8 g of Dow epoxy resin DER 332 was mixed with the modified clay thoroughly by using a homogenizer for 2 hours at a speed of 10000 rpm. The mixture was dried in a vacuum oven at 50° C for 48 hours and then mixed with 16g curing agent (ETHACURE 100 LC) by stirring and cured at 100° C for 2 hours and 180° C for 5 hours. The final product was a plate and subject to a number of tests.

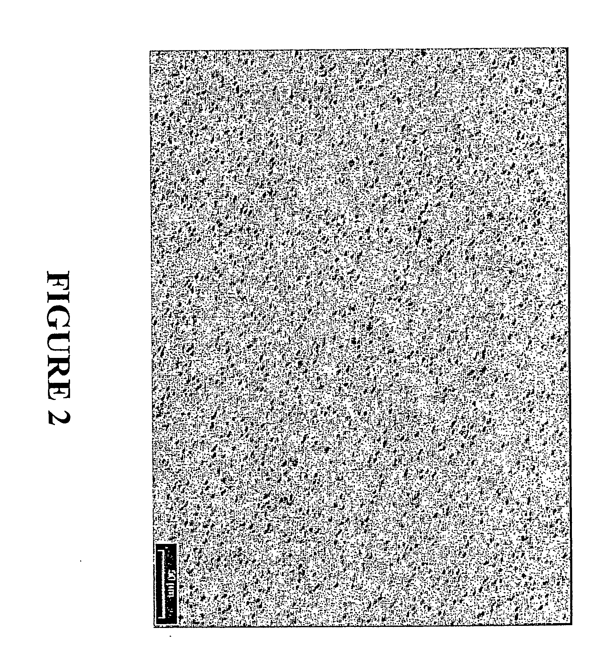

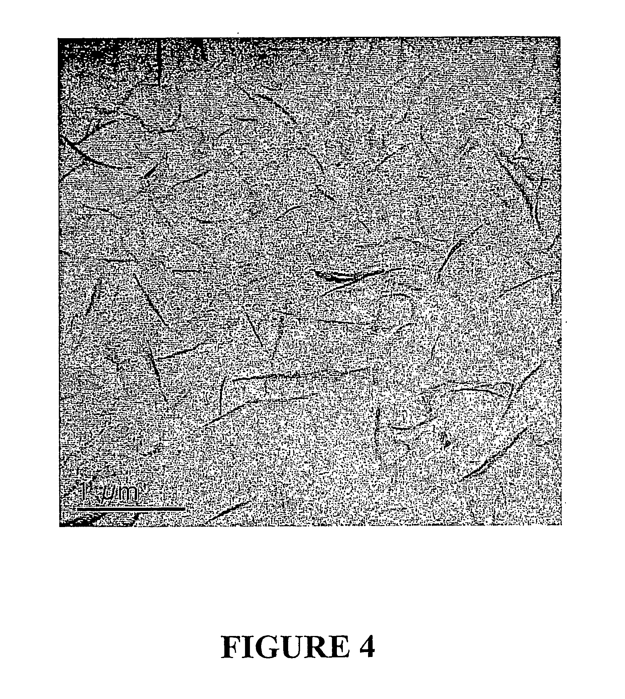

The optical micrograph is shown in Figure 2. The TEM micrograph is shown in Figure 4.

Optical microscope (OM) observations confirmed that the clay particles have uniformly dispersed in the matrix in the nanocomposites prepared with technique of the present invention. In an epoxy/organoclay composite prepared with existing technique, the aggregate size is 10-20 micron (Figure 1). In the above-mentioned epoxy/clay nanocomposite, clay particles are uniformly dispersed in the matrix and the size of the aggregates is less than 1 micron (Figure 2).

The results of a transmission electron microscopic (TEM) study show that the clay is highly exfoliated and the clay layers are uniformly dispersed in the epoxy matrix (Figure 4), which is significantly superior to that of the samples made with existing technique (Figure 3).

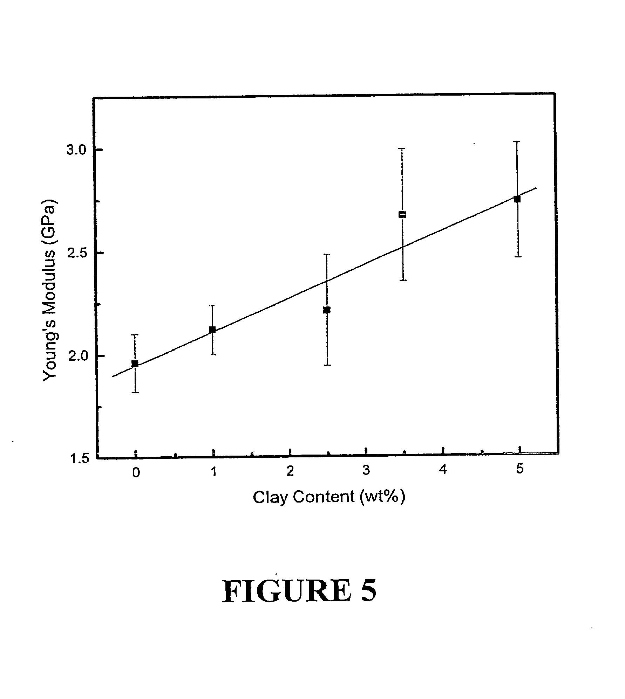

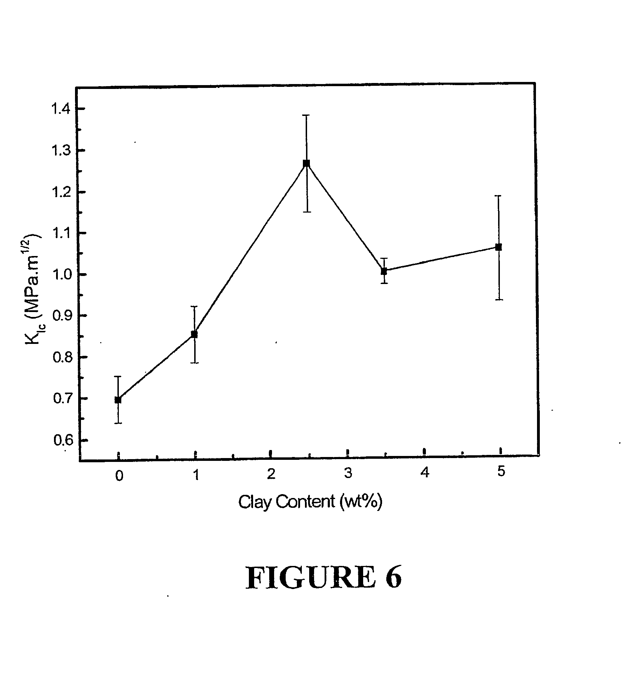

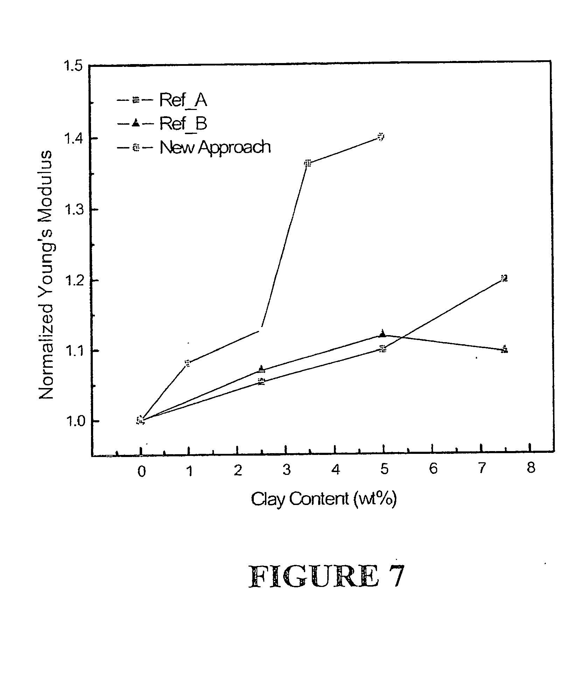

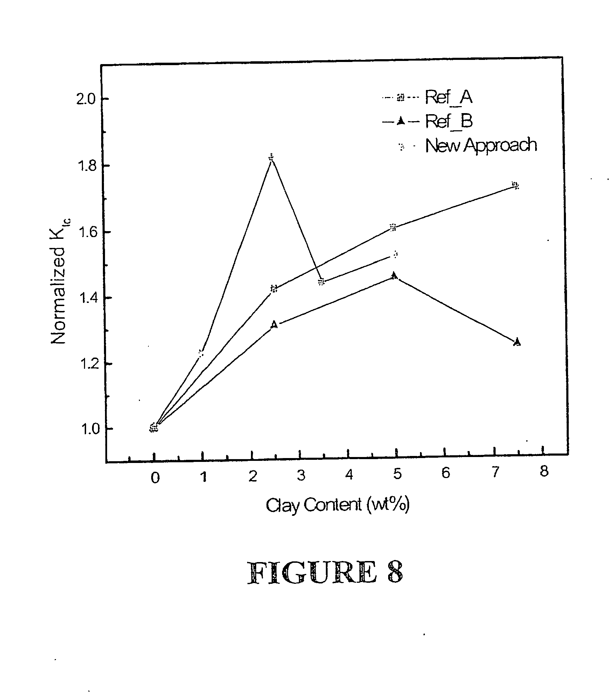

The incorporation of clay into epoxy improves both the Young's modulus (Figure 5) and fracture toughness (Figure 6). At a clay load of 2.5wt%, the fracture toughness shows a maximum value (Figure 6). Compared with the data reported in literature, the nanocomposites prepared with the approach of the invention show better performance in terms of both Young's modulus and fracture toughness. An example is shown in Figures 7 and 8, in which the data are normalized and compared. It is obvious that the nanocomposites prepared with the approach of the invention show higher Young's modulus regardless of the clay content. The maximum value of fracture toughness is higher than that of the samples prepared with existing approach.

The dynamic mechanical properties of the nanocomposites are shown in Figures 9 and 10, together with that of an epoxy/organoclay nanocomposite (epoxy/93A). It can be seen that the storage modulus of the nanocomposites with approach of the invention increase with the clay load, while the Tg didn't change much. For epoxy/organoclay, however, the storage modulus is lower at the same load, and the Tg decrease dramatically.

Figures 11 and 12 show a comparison of transmittance. Because the clay dispersion and exfoliation have been improved with the approach of the invention, the transmittance of the new epoxy/clay nanocomposites (Figure11) is better than that of the nanocomposites prepared with the existing approaches (Figure 12).

### Example 3

2 grams of purified sodium montmorillonite having a cation exchange capacity of 145 meq/100g, was mixed with 100 ml of water, with stirring for 24 hours at room temperature to form a suspension. The suspension was precipitated in 1000 ml of acetone at room temperature with stirring and washed with acetone at room temperature for 3 times. 3-glycidopropyltrimethoxy-silane was added as the coupling agent in an amount of 0.1 g. The mixture was then stirred for 12 hours at room temperature. Then 50 g of Ciba epoxy resin LY5210 was mixed with the modified clay thoroughly by using a homogenizer for 2 hours at a speed of 10000 rpm. The mixture was dried in a vacuum oven at 50° C for 48 hours and then mixed with 25g curing agent (Ciba HY2954) by stirring and cured at 160° C for 2 hours and 220° C for 2 hours. The final product was a plate and subject to a number of tests.

The TEM micrograph show that the clay is highly exfoliated and the clay layers are uniformly dispersed in the epoxy matrix (Figure 13), which is significantly superior to that of the samples made with existing technique (Figure 3).

The dynamic mechanical properties of the nanocomposites are shown in Figures 14 and 15. It can be seen that both the storage modulus and Tg of the nanocomposites made by the approach of the invention increase with the clay load.

The incorporation of clay into epoxy improves fracture toughness (Figure 16). At a clay load of 2.5wt%, the fracture toughness shows a maximum value.

### Example 4

2 grams of purified sodium montmorillonite having a cation exchange capacity of 145 meq/100g, was mixed with 100 ml of water, with stirring for 24 hours at room temperature to form a suspension. The suspension was precipitated in 1000 ml of ethanol at room temperature with stirring and washed with ethanol at room temperature for 3 times. 3-aminopropyltrimethoxy-silane was added as the coupling agent in an amount of 0.1 g. The mixture was then stirred for 12 hours at room temperature. Then 60.8 g of Dow epoxy resin DER 332 was mixed with the modified clay thoroughly by using a homogenizer for 2 hours at a speed of 10000 rpm. The mixture was dried in a vacuum oven at 60° C for 48 hours and then mixed with 16g curing agent (ETHACURE 100 LC) by stirring and cured at 100° C for 2 hours and 180° C for 5 hours. The final product was a plate and subject to a number of tests.

The TEM micrograph show that the clay is highly exfoliated and the clay layers are uniformly dispersed in the epoxy matrix (Figure 17), which is significantly superior to that of the samples made with existing technique (Figure 3).

### Example 5

2 grams of purified sodium montmorillonite having a cation exchange capacity of 145 meq/100g, was mixed with 100 ml of water, with stirring for 24 hours at room temperature to form a suspension. The suspension was precipitated in 1000 ml of acetone at room temperature with stirring and washed with acetone at room temperature for 3 times. 3-glycidopropyltrimethoxy-silane was added as the coupling agent in an amount of 0.1 g. The mixture was then stirred for 12 hours at room temperature. Then 60.8 g of Dow epoxy resin DER 332 was mixed with the modified clay thoroughly by using a homogenizer for 2 hours at a speed of 10000 rpm. The mixture was dried in a vacuum oven at 50° C for 48 hours and then mixed with 16g curing agent (ETHACURE 100 LC) by stirring and cured at 100° C for 2 hours and 180° C for 5 hours. The final product was a plate and subject to a number of tests.

The TEM micrograph show that the clay is highly exfoliated and the clay layers are uniformly dispersed in the epoxy matrix (Figure 18), which is significantly superior to that of the samples made with existing technique (Figure 3).

The following table summarises the main components used in each of the Examples and the relevant Figures illustrating the properties of the final product.

**TABLE**

| Examples | Polymer Matrix | Clay | Solvent | Modifier | Figures |
|---|---|---|---|---|---|
| 1 | DER 332 | Organoclay | None | None | 1,3 |
| 2 | DER332 | Pristine clay | Acetone | 3-aminopropyltrimethoxy-silane | 2,4-12 |
| 3 | LY 5210 | Pristine clay | Ethanol | 3-glycidopropyltrimethoxy-silane | 13-16 |
| 4 | DER332 | Pristine clay | Ethanol | 3-aminopropyltrimethoxy-silane | 17 |
| 5 | DER332 | Pristine clay | Acetone | 3-glycidopropyltrimethoxy-silane | 18 |

The invention therefore further provides a nanocomposite in which exfoliated clay particles are uniformly dispersed in a polymer matrix.

The nanocomposites of the invention can be used as parts of aircraft, automobile etc. where high modulus and high hardness, high heat distortion temperature and high thermal stability are required; printed circuit boards, electronic packaging, electrical components etc; beverage and food containers, films and coatings etc where high barrier properties and high transparency are required; and tyres, tubes etc.

## Claims

1. A process of forming a nanocomposite comprising:
treating pristine clay with water to form a swollen clay;
intercalating said swollen clay with an organic solvent to form an organic solvent intercalated swollen clay by exchanging said water with said organic solvent whilst maintaining said swollen clay in a swollen state with said organic solvent;
treating said organic solvent intercalated swollen clay with a modifier; and,
mixing said organic solvent intercalated swollen clay so modified with a matrix material comprising a monomer, oligomer, polymer or any combination thereof to form a nanocomposite mixture and, when said matrix material comprises a monomer or oligomer, polymerizing said matrix material.

2. A process as claimed in claim 1 wherein said organic solvent is extracted from said nanocomposite mixture.

3. A process as claimed in claim 2 wherein said organic solvent is extracted from said nanocomposite mixture prior to, during, or after a required polymerization of said matrix material.

4. The process as claimed in claim 1, wherein said matrix material is selected from the group consisting of thermoplastic polymers, thermosetting polymers, and combinations thereof.

5. The process as claimed in claim 1 wherein said clay is selected from the group consisting of smectite and kaolin clays.

6. The process as claimed in claim 5, wherein said clay is a smectite selected from the group comprising montmorillonite, hectorite, saponite, sauconite, beidellite, stevensite, nontronite, and combinations of two or more thereof.

7. The process as claimed in claim 6 wherein the clay is selected from hectorite, montmorillonite, beidellite, stevensite, and saponite clays.

8. The process as claimed in claim 1, wherein said clay has a cation-exchange capacity ranging from 7 to 300 meq/100g.

9. The process as claimed in claim 1, wherein said clay is present in an amount ranging from 0.1% to 40% by weight based on the total weight of the polymer composite.

10. The process as claimed in claim 1, wherein the clay/water ratio ranges from 1:1 to 1:1000.

11. The process as claimed in claim 1, wherein said organic solvent is selected from the group consisting of polar organic chemicals and non-polar organic chemicals.

12. The process as claimed in claim 1, wherein water and organic solvent are present in a ratio of from 1:1 to 1:50 during exchange of water by said organic solvent.

13. The process as claimed in claim 1, wherein said modifier is selected from the group consisting of surfactants, coupling agents, and compatibilizers.

14. The process as claimed in claim 1, wherein said modifier is selected from the group consisting of alkylammonium salts, organosllane, alkyl acids and functional derivatives thereof, grafted copolymers and block copolymers.

15. The process as claimed in claim 13, wherein said coupling agent is present in an amount ranging from 0.05% to 15% by weight based on the weight of the clay.

## Patentansprüche

1. Ein Verfahren zur Bildung eines Nanoverbundstoffs umfassend:
Behandlung von reinem Tonmineral mit Wasser, um ein aufgeschwemmtes Tonmineral zu bilden;
Einlagern eines organischen Lösungsmittels in das aufgeschwemmte Tonmineral, um durch Austauschen des Wassers durch das organische Lösungsmittel ein aufgeschwemmtes Tonmineral mit eingelagertem organischem Lösungsmittel zu bilden, wobei das aufgeschwemmte Tonmineral durch das organische Lösungsmittel in einem aufgeschwemmten Zustand gehalten wird;
Behandlung des aufgeschwemmten Tonminerals mit eingelagertem organischem Lösungsmittel mit einem Modifizierungsmittel;
und,
Mischen des so modifizierten aufgeschwemmten Tonminerals mit eingelagertem organischem Lösungsmittel mit einem Matrix-Material, das ein Monomer, Oligomer, Polymer oder irgendeine Kombination davon umfasst, um eine Nanoverbundstoffmischung zu bilden, und, falls das Matrix-Material ein Monomer oder Oligomer umfasst, Polymerisieren des Matrix-Materials.

2. Ein Verfahren, wie in Anspruch 1 beansprucht, wobei das organische Lösungsmittel aus der Nanoverbundstoffmischung extrahiert wird.

3. Ein Verfahren, wie in Anspruch 2 beansprucht, wobei das organische Lösungsmittel aus der Nanoverbundstoffmischung vor, während oder nach einer notwendigen Polymerisation des Matrix-Materials extrahiert wird.

4. Das Verfahren, wie in Anspruch 1 beansprucht, wobei das Matrix-Material ausgewählt wird aus der Gruppe bestehend aus thermoplastischen Polymeren, wärmehärtbaren Polymeren und Kombinationen davon.

5. Das Verfahren, wie in Anspruch 1 beansprucht, wobei das Tonmineral ausgewählt wird aus der Gruppe bestehend aus Smektit und Kaolin Tonmineralien.

6. Das Verfahren, wie in Anspruch 5 beansprucht, wobei das Tonmineral ein Smektit ist, das aus der Gruppe ausgewählt wird, die Montmorillonit, Hectorit, Saponit, Sauconit, Beidellit, Stevensit, Nontronit und Kombinationen von zwei oder mehr davon umfasst.

7. Das Verfahren, wie in Anspruch 6 beansprucht, wobei das Tonmineral ausgewählt wird aus Hectorit, Montmorillonit, Beidellit, Stevensit und Saponit Tonmineralien.

8. Das Verfahren, wie in Anspruch 1 beansprucht, wobei das Tonmineral eine KationenAustauschkapazität in dem Bereich von 7 bis 300 meq/100 g besitzt.

9. Das Verfahren, wie in Anspruch 1 beansprucht, wobei das Tonmineral in einer Menge vorhanden ist, die von 0.1 Gew.% bis 40 Gew.%, basierend auf dem Gesamtgewicht des Polymerverbundstoffs, reicht.

10. Für das Verfahren, wie in Anspruch 1 beansprucht, wobei das Tonmineral/Wasserverhältnis von 1:1 bis 1:1000 reicht.

11. Das Verfahren, wie in Anspruch 1 beansprucht, wobei das organische Lösungsmittel ausgewählt wird aus der Gruppe bestehend aus polaren organischen Chemikalien und nicht-polaren organischen Chemikalien.

12. Das Verfahren, wie in Anspruch 1 beansprucht, wobei Wasser und organisches Lösungsmittel während des Austauschs des Wassers durch das organische Lösungsmittel in einem Verhältnis von 1:1 bis 1:50 vorhanden sind.

13. Das Verfahren, wie in Anspruch 1 beansprucht, wobei das Modifizierungsmittel ausgewählt wird aus der Gruppe bestehend aus Tensiden, Kopplungsstoffen und Phasenvermittlern.

14. Das Verfahren, wie in Anspruch 1 beansprucht, wobei das Modifizierungsmittel ausgewählt wird aus der Gruppe bestehend aus Alkylammoniumsalzen, Organosilan, Alkylsäuren und funktionellen Derivaten davon, gepfropften Copolymeren und Block-Copolymeren.

15. Das Verfahren, wie in Anspruch 13 beansprucht, wobei der Kopplungstoff in einer Menge vorhanden ist, die von 0.05 Gew.% bis 15 Gew.%, basierend auf dem Gewicht des Tonminerals, reicht.

## Revendications

1. Procédé de formation d'un nanocomposite comprenant :
le traitement d'une argile naturelle avec de l'eau pour former une argile gonflée ;
l'intercalation de ladite argile gonflée avec un solvant organique pour former une argile gonflée intercalée d'un solvant organique en échangeant ladite eau avec ledit solvant organique tout en maintenant ladite argile gonflée dans un état gonflé avec ledit solvant organique ;
le traitement de ladite argile gonflée intercalée d'un solvant organique avec un modificateur ; et,
le mélange de ladite argile gonflée intercalée d'un solvant organique ainsi modifiée avec un matériau matriciel comprenant un monomère, un oligomère, un polymère ou toute combinaison de ceux-ci pour former un mélange nanocomposite et, lorsque ledit matériau matriciel comprend un monomère ou un oligomère, la polymérisation dudit matériau matriciel.

2. Procédé selon la revendication 1, dans lequel ledit solvant organique est extrait dudit mélange nanocomposite.

3. Procédé selon la revendication 2, dans lequel ledit solvant organique est extrait dudit mélange nanocomposite avant, pendant ou après une polymérisation requise dudit matériau matriciel.

4. Procédé selon la revendication 1, dans lequel ledit matériau matriciel est choisi dans le groupe constitué des polymères thermoplastiques, des polymères thermodurcissables et de leurs combinaisons.

5. Procédé selon la revendication 1, dans lequel ladite argile est choisie dans le groupe constitué des argiles smectites et kaolinites.

6. Procédé selon la revendication 5, dans lequel ladite argile est une smectite choisie dans le groupe comprenant la montmorillonite, l'hectorite, la saponite, la sauconite, la beidellite, la stevensite, la nontronite et les combinaisons de deux ou plusieurs de celles-ci.

7. Procédé selon la revendication 6, dans lequel l'argile est choisie parmi les argiles de type hectorite, montmorillonite, beidellite, stevensite et saponite.

8. Procédé selon la revendication 1, dans lequel ladite argile a une capacité d'échange cationique variant de 7 à 300 méq/100 g.

9. Procédé selon la revendication 1, dans lequel ladite argile est présente en une quantité variant de 0,1 % à 40 % en poids par rapport au poids total du composite de polymère.

10. Procédé selon la revendication 1, dans lequel le rapport argile/eau varie de 1/1 à 1/1 000.

11. Procédé selon la revendication 1, dans lequel ledit solvant organique est choisi dans le groupe constitué des composés chimiques organiques polaires et des composés chimiques organiques non polaires.

12. Procédé selon la revendication 1, dans lequel l'eau et le solvant organique sont présents dans un rapport de 1/1 à 1/50 pendant l'échange de l'eau par ledit solvant organique.

13. Procédé selon la revendication 1, dans lequel ledit modificateur est choisi dans le groupe constitué des tensioactifs, des agents de couplage et des compatibilisants.

14. Procédé selon la revendication 1, dans lequel ledit modificateur est choisi dans le groupe constitué des sels d'alkylammonium, d'un organosilane, des acides d'alkyle et des dérivés fonctionnels de ceux-ci, des copolymères greffés et des copolymères à blocs.

15. Procédé selon la revendication 13, dans lequel ledit agent de couplage est présent en une quantité variant de 0,05 % à 15 % en poids par rapport au poids de l'argile.
